# EUROPÄISCHE PATENTSCHRIFT

(11) **EP 0 465 785 B1**
(45) Veröffentlichungstag und Bekanntmachung des Hinweises auf die Patenterteilung: **18.12.1996**
(21) Anmeldenummer: 91107071.2
(22) Anmeldetag: 02.05.1991
(51) Int. Cl.: B64C 1/14

(54) **Vorrichtung zum Bewegen einer Flugzeugtür**
Device for moving an aircraft door
Dispositif pour manoeuvrer une porte d'avion

(30) Priorität: 11.07.1990 DE 4022067
(43) Veröffentlichungstag der Anmeldung: 15.01.1992
(73) Patentinhaber: Daimler-Benz Aerospace Airbus Gesellschaft mit beschränkter Haftung, 21129 Hamburg (DE)
(72) Erfinder: Kallies, Günter, W-2000 Hamburg 54 (DE); Hermann, Dieter, W-2000 Norderstedt 1 (DE)
(74) Vertreter: Hansmann, Dierk, Dipl.-Ing.

(56) Entgegenhaltungen:
- EP-A- 0 105 082
- EP-A- 0 321 994
- US-A- 4 522 359
- US-A- 4 720 065

## Beschreibung

Die Erfindung bezieht sich auf eine Vorrichtung nach dem Oberbegriff des Anspruchs 1 bzw. 2.

Flugzeugtüren sollen einerseits während des Betriebes fest geschlossen sein und alle auftretenden Belastungen sicher aufnehmen, andererseits sollen sie aber auch im Notfall schnell und auf einfache Weise zu öffnen sein. Beim Schließen einer Flugzeugtür wird diese gegenüber der Rumpfstruktur in eine formschlüssige Position gebracht und verriegelt. Falls das betreffende Flugzeug eine Druckkabine aufweist, hat die Tür während des Fluges dem Kabineninnendruck standzuhalten. Bei Passagierflugzeugen kommt hinzu, daß jede Passagiertür mit einer Notrutsche versehen ist, die im Bedarfsfall über die Bedienungselemente der Tür zu aktivieren ist. Zur Herstellung einer formschlüssigen Verbindung zwischen der Tür und dem Rumpf, zur Übertragung der aus dem Kabineninnendruck resultierenden Kräfte, sind im wesentlichen zwei Prinzipien bekannt, und zwar das Anlageprinzip und das Knebelprinzip. Nach dem Anlageprinzip ausgebildete Türen weisen an ihren seitlichen Rändern Anlagebeschläge auf. Zum Schließen werden diese Türen nach dem Einschwenken in die Rumpfstruktur um eine bestimmte Strecke abgesenkt, so daß sich die türseitigen Anlagebeschläge an entsprechende rumpfseitige Anlagebeschläge anlegen können, die dann alle nach außen gerichteten Türkräfte sicher aufnehmen.

Eine nach dem Knebelprinzip ausgebildete Tür weist an ihren seitliche Rändern drehbare Knebel auf, die beim Einschwenken der Tür längs zur Schwenkbewegung stehen und in rumpfseitige Aufnahmen eintreten. Zum Schließen dieser Tür werden die Knebel dann innerhalb der Aufnahmen quer gestellt, wodurch auch hier Formschluß erreicht wird. Bei bekannten Türen beider Prinzipien werden die entsprechenden Bedienungsmaßnahmen wie Schließen, Verriegeln, Aktivieren der Notrutsche und die entgegengesetzten Maßnahmen, von Hand ausgeführt. Eine bekannte nach dem Anlageprinzip ausgebildete Flugzeugtür ist beispielsweise der US-PS 4,720,065 zu entnehmen. Dabei ist der innerhalb der Tür angeordnete Mechanismus so ausgebildet daß die über einen auf der Innenseite der Tür angeordneten Handhebel eingeleitete Bedienungsbewegung auf eine Anhebewelle, eine Schließklappe und eine Notrutschenverriegelung übertragen wird. Mittels der Anhebewelle wird das beim Öffnen bzw. Schließen erforderliche Anheben bzw. Absenken der Tür bewerkstelligt. Beispielhaft für die Wirkungsweise der Tür ist der Ablauf beim Anheben und Absenken erläutert. Die Anhebewelle weist an ihren seitlichen außerhalb der Tür liegenden Enden jeweils eine Kurbel auf, deren Hubzapfen beim Einschwenken der Tür in entsprechende Kulissen eintreten. Zum Absenken der Tür wird dann die Anhebewelle mittels des Handhebels so gedreht, daß die Zapfen jeweils auf einem Kreisbogen relativ zur Tür nach oben wandern. Hierdurch stützen sich die Zapfen gegen die Kulissen ab, so daß die Tür gegen die Reibung der Türdichtung nach unten bewegt, also abgesenkt wird. Zum Öffnen der Tür muß diese zunächst durch eine Drehung der Anhebewelle in Gegenrichtung angehoben werden. Um die insbesondere zum Anheben der Tür erforderliche Körperkraft einer Bedienperson zu reduzieren, weist die Tür einen sog. Gewichtsausgleich auf, der den Anhebevorgang mittels einer zuvor beim Absenken gespannten Feder unterstützt. Der zur Durchführung aller genannten Funktionen erforderliche Mechanismus ist sehr komplex und weist eine Vielzahl von Lagern, Wellen, Hebeln, Gelenken sowie einen Kurventrieb auf. Hierbei ist zu beachten, daß bei Anwendung des sog. Fail-Save-Prinzips die Anzahl der Einzelteile noch erhöht wird. Infolge der genannten Vielzahl mechanisch wirksamer Elemente sind die Herstellkosten einer derartigen Tür recht hoch. Außerdem ist insbesondere bei manchen größeren Passagiertüren festzustellen, daß deren Bedienung nicht nur zum Anheben eine relativ große Körperkraft seitens der betreffenden Bedienperson erfordern.

Die am Beispiel einer Flugzeugtür nach dem Anlageprinzip aufgezeigten Sachverhalte treffen im Prinzip auch bei Türen nach dem Knebelprinzip zu. Obwohl bei dieser Art von Flugzeugtüren das Anheben und Absenken entfällt, ist der fertigungstechnische Aufwand infolge der verbleibenden mechanischen Bauteile immer noch recht hoch. Ein weiterer Nachteil des Knebelprinzips ist darin zu sehen, daß dieses nur mit einer exakten Positionierung der Knebel und Aufnahmen, also nur mit entsprechendem Zusatzaufwand, einwandfrei funktioniert.

Eine Flugzeugtür mit motorischer Betätigung ist der US-A-4,497,462 zu entnehmen. Diese zeigt ein nach außen zu öffnendes Frachtladetor, das durch zwei Elektromotoren betätigt wird. Hierdurch wird das Tor nicht mehr von Hand sondern durch die Motoren geöffnet. Dabei sind im Prinzip die üblichen Federn zum Gewichtsausgleich durch die Elektromotoren ersetzt, um den Kraftbedarf zum Öffnen des Tores zu reduzieren. Ein weiterer Elektromotor, in Form eines Linearmotors wirkt über einen Hebel auf die mit seitlichen Kurbeln versehene Anhebewelle des Tores ein, so daß auch das Anheben zum Öffnen des Tores durch Motorkraft erfolgt. Da hierbei alle anderen zum Öffnen und Schließen der Tür erforderlichen internen Funktionen weiterhin mit Hilfe üblicher Maschinenelemente wie Hebel, Wellen, Stangen, Nocken, Kurvenscheiben u.s.w. ablaufen, enthält dieses Dokument keine Anregung, die Kinematik einer Flugzeugtür durch Anwendung von Elektromotoren zu vereinfachen.

Demgemäß liegt der Erfindung die Aufgabe zugrunde, eine gattungsgemäße Vorrichtung derart auszubilden, daß eine automatische Betätigung der Tür ermöglicht wird, wobei die dafür erforderlichen Bewegungen exakt ausgeführt werden sollen und die Vorrichtung so vereinfacht wird, daß mechanisch wirksame Elemente wie Lager, Wellen, Hebel weitgehend entfallen.

Diese Aufgabe wird bei einer gattungsgemäßen Vorrichtung durch die kennzeichnenden Merkmale der Ansprüche 1 und 2 gelöst.

Dabei ist insbesondere von Vorteil, daß außer der Reduzierung der Herstellkosten und einer erleichterten Bedienung auch eine Reduzierung des Baugewichts erreicht wird.

Diese Reduzierung des Gewichts ergibt sich daraus, daß die genannten Maschinenelemente entfallen und die stattdessen eingebauten Elektromotoren aufgrund neuer Materialien sehr klein und leicht sind.

Vorteilhafte Weiterbildungen der Erfindung sind in den Unteransprüchen angegeben.

Die Erfindung ist anhand der Zeichnung dargestellt und in der Beispielbeschreibung näher erläutert. Es zeigen
- Fig. 1: eine Übersichtsdarstellung einer Vorrichtung zum Bewegen einer Flugzeugtür,
- Fig. 2: den Schnitt II - II nach Fig. 1,
- Fig. 3: eine Ansicht einer Passagiertür nach dem Knebelprinzip und
- Fig. 4: den Schnitt IV - IV nach Fig. 3.

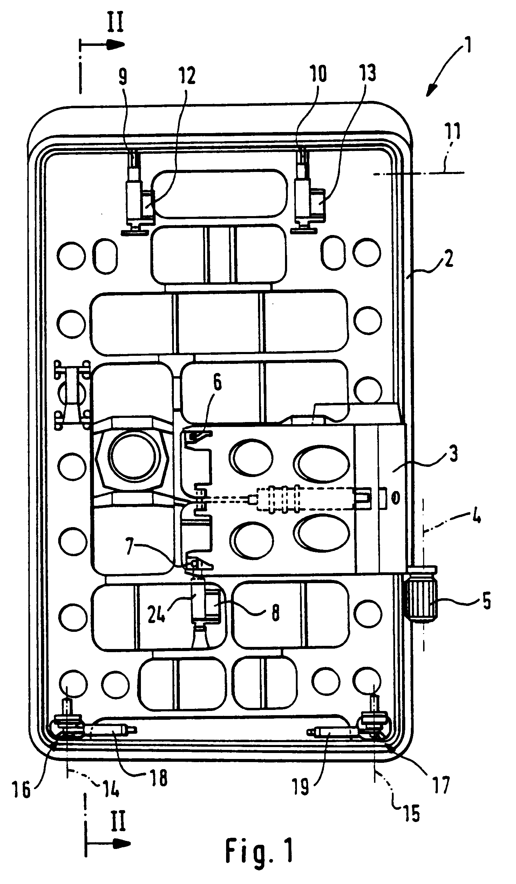

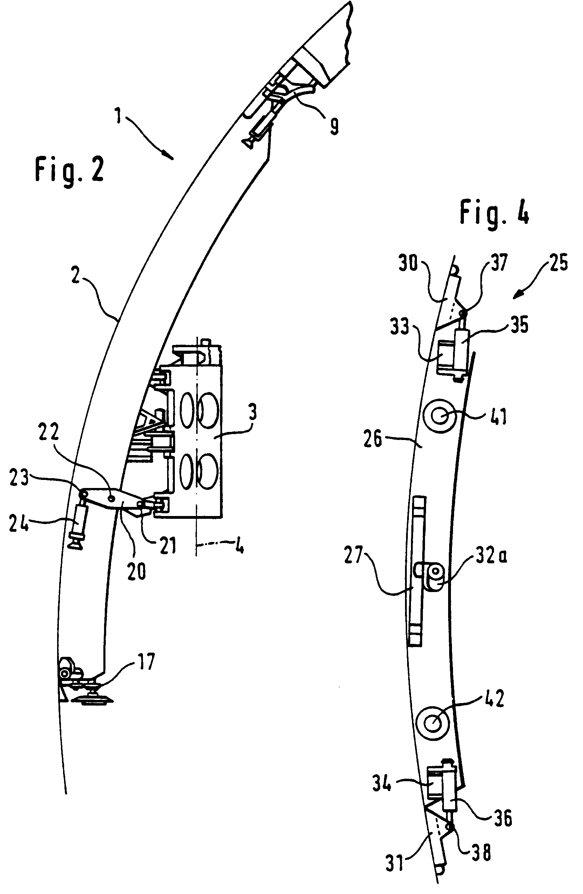

Die Fign. 1 und 2 zeigen eine nach dem Anlageprinzip ausgebildete Passagiertür 1 in geschlossener und verriegelter Position. Dabei ist die Tür 1 in Fig. 1 vom Rumpfinneren her gesehen, wobei die umgebende Rumpfstruktur und die Innenverkleidung der Tür weggelassen sind. Diese Tür 1 besteht aus dem Strukturbauteil 2 mit den weiter unten beschriebenen Funktionseinbauten sowie den Anlenkelementen, wodurch die Tür 1 mit der hier nicht gezeigten Rumpfstruktur gelenkig verbunden ist. Von den Anlenkelementen ist hier der Traglenker 3 gezeigt, der das Gewicht der Tür bei deren Aus- und Einschwenken aufnimmt. Der Traglenker 3 ist um eine rumpffeste Achse 4 schwenkbar gelagert. Zum Schwenken des Traglenkers 3 um die Achse 4 ist rumpfseitig ein Schrittmotor 5 angeordnet. Türseitig weist der Traglenker 3 zwei Kreuzgelenke 6 und 7 auf, in denen jeweils ein um eine türfeste horizontale Achse schwenkbarer Dreieckslenker angreift. Diese Dreieckslenker bilden mit dem Traglenker 3 und der Struktur 2 der Tür 1 ein Gelenkviereck in Form eines Parallelogramms, wodurch die Tür 1 beim Anheben gegenüber dem Traglenker exakt geführt ist. Zum Anheben bzw. Absenken der Tür ist ein weiterer Schrittmotor 8 vorgesehen, der abgestützt gegen die Türstruktur, über eine Schubstange auf den unteren Dreieckslenker so einwirkt, daß dieser um seine türfeste Achse nach oben und unten geschwenkt wird, was schließlich ein Anheben bzw. Absenken der Tür zur Folge hat. Im oberen Türbereich sind zwei Verriegelungshaken 9 und 10 angeordnet, die um eine türfeste horizontale Achse 11 schwenkbar gelagert sind und in verriegeltem Zustand in entsprechende rumpffeste Gegenelemente eingreifen. Zur Betätigung der Verriegelungshaken 9,10 ist jeweils ein Schrittmotor 12 und 13 vorgesehen. Im unteren Türbereich befinden sich zwei jeweils um eine vertikale Achse 14 bzw. 15 schwenkbare Notrutschenhebel 16 und 17. Die Betätigung der Notrutschenhebel 16 und 17 erfolgt jeweils mittels eines Motors 18 bzw. 19. In Fig 2 ist der untere um die türfeste Achse 21 schwenkbare Dreieckslenker 20 gezeigt. Dieser ist im Punkt 21 am Traglenker 3 angelenkt und über die Achse 22 hinaus bis zum Gelenkpunkt 23 verlängert, in dem der Spindeltrieb 24 des Motors 8 angreift. Ein Ausfahren des Spindeltriebes 24 bewirkt eine Drehung des Hebels 20 im Uhrzeigersinn um den türfesten Punkt 22, wodurch der rechte Teil des Hebels mit dem traglenkerseitigen Gelenkpunkt 21 relativ zur Tür 1 nach unten wandert. Da der Punkt 21 in vertikaler Richtung unbeweglich ist, bewirkt ein Ausfahren des Spindeltriebes ein Anheben der Tür 1 gegenüber dem Traglenker 3 und umgekehrt. Damit sind alle Bewegungen der Tür 1 mittels der vorgenannten Elektromotoren ausführbar. Dabei werden die Motoren aufgrund entsprechender abgespeicherter Programme so angesteuert, daß jeweils die gerade erforderlichen Operationen ablaufen.

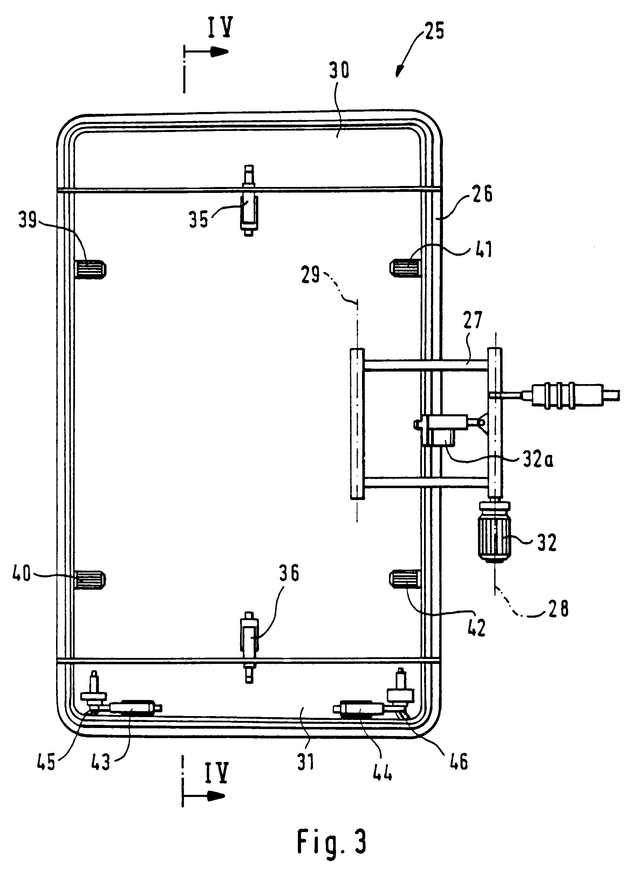

Die Fign. 3 und 4 zeigen eine nach dem Knebelprinzip arbeitende Passagiertür 25, im wesentlichen bestehend aus der Struktur 26, einem Traglenker 27 mit einer rumpfseitigen Achse 28 und einer türseitigen Achse 29, wobei an der Struktur 26 eine obere Verkürzungsklappe 30 und eine untere Verkürzungsklappe 31 angelenkt ist. Auch hierbei werden alle zum Öffnen bzw. Schließen der Tür erforderlichen Operationen von Schrittmotoren ausgeführt. So ist zur Betätigung des Traglenkers 27 zum Schwenken um die Achse 28 ein rumpfseitiger Motor 32 vorgesehen. Dabei geschieht die Steuerung der Relativbewegung der Tür 25 gegenüber dem hier nicht gezeigte Flugzeugrumpf mittels eines Schwenkmotors 32a. Die Betätigung der Verkürzungsklappen 30,31 geschieht mittels strukturfester Stellmotoren 33 und 34, die jeweils einen Spindeltrieb 35 bzw. 36 antreiben. Die Spindeltriebe 35 und 36 wirken ihrerseits über Gelenkpunkte 37 und 38 auf die Verkürzungsklappen 30,31 ein. Die Tür 25 weist vier hier nicht sichtbare Knebel auf, die wie eingangs dargelegt, die Verriegelung der Tür bewerkstelligen. Für jeden dieser Knebel ist ein eigener Schrittmotor 39,40,41 und 42 vorgesehen. Zur Abgabe der erforderlichen Drehmomente bzw. Stellkräfte sind alle hier genannten Schrittmotoren mit Getrieben versehen, wodurch eine Übersetzung ins Langsame erreicht wird. Hierzu dienen beispielsweise die erwähnten Spindeltriebe. Im Falle der Schrittmotoren 39 bis 41 sind entsprechende Zahnradgetriebe vorgesehen. Im unteren Bereich der Tür 25 sind zwei weitere Stellmotoren angeordnet, die die Betätigung der Notrutschenmechanik 45,46 übernehmen. Dieses Beispiel zeigt sehr deutlich, daß aufwendige Machinenelemente durch relativ kleine Schrittmotoren ersetzt werden können. Voraussetzung hierfür ist natürlich, daß die Motoren exakt die erforderlichen Bewegungen ausführen. Diese Exaktheit elektromotorischer Bewegungen ist mit den bekannten Maßnahmen der rechnergesteuerten Automation problemlos realisierbar. Durch die Ausbildung der Motoren 39 bis 42 als Schrittmotoren können diese beispielsweise bei Verwendung eines entsprechenden Programms gleichzeitig eine bestimmte Anzahl von Umdrehungen ausführen, um die betreffenden Knebel in die erforderliche Stellung zu bringen. Aufgrund dieser steuerungstechnischen Möglichkeiten ist der Traglenker 27 als künstliches Parallelogramm ausgebildet. Dabei wird während des Öffnungsvorganges der jeweilige Drehwinkel des Traglenkers 27 um die rumpffeste Achse 28 ermittelt und aufgrund eines entsprechenden Programms ein Steuersignal für den Schwenkmotor 32a derart ermittelt, daß dieser die Tür gegenüber dem Traglenker 27 immer so schwenkt, daß diese während des Ausschwenkens mittels des Traglenkers 27 selbst keine Drehung erfährt.

## Patentansprüche

1. Vorrichtung zum Bewegen einer Flugzeugtür (1,25), die zum Öffnen nach außen geschwenkt und zum Schließen in die Rumpfstruktur eingeschwenkt und dann in eine formschlüssige Position gegenüber der Rumpfstruktur gebracht wird, wobei die Übertragung der aus dem Kabineninnendruck resultierenden Kräfte über Anlagebeschläge erfolgt und die Tür (1,25) während des Schwenkvorganges durch einen Traglenker (3,27) mit einem rumpfnahen und einem türnahen Ende gehalten wird und Elektromotoren zum Betätigen der Flugzeugtür (1,25) vorgesehen sind, wobei für die Funktionen des Einschwenkens, Schließens und Verriegelns sowie für die umgekehrten Funktionen Elektromotoren derart vorgesehen sind, daß die unterschiedlichen Funktionen koordiniert ablaufen, dadurch gekennzeichnet, daß die Elektromotoren in Form programmsteuerbarer Schrittmotoren (5,8,12,13,18,19, 32,32a,35,36,43,44) vorgesehen sind und dadurch, daß die unterschiedlichen Funktionen aufgrund abgespeicherter Programme koordiniert ablaufen, wobei die Tür (1,25) gegenüber dem Traglenker (3,27) mittels eines Parallelogramms geführt ist und ein Schrittmotor (8) zum Anheben bzw. Absenken der Tür (1,25) über einen Spindeltrieb (24) vorgesehen ist, der über einen Hebel (20) so auf das Parallelogramm einwirkt, daß die Tür (1,25) bei einem Aus- bzw. Einfahren des Spindeltriebes (24) gegenüber dem Traglenker (3,27) angehoben bzw. abgesenkt wird.

2. Vorrichtung zum Bewegen einer Flugzeugtür (1,25), die zum Öffnen nach außen geschwenkt und zum Schließen in die Rumpfstruktur eingeschwenkt und dann in eine formschlüssige Position gegenüber der Rumpfstruktur gebracht wird, wobei die Übertragung der aus dem Kabineninnendruck resultierenden Kräfte über Knebel erfolgt und die Tür (1,25) während des Schwenkvorganges durch einen Traglenker (3,27) mit einem rumpfnahen und einem türnahen Ende gehalten wird und Elektromotoren zum Betätigen der Flugzeugtür (1,25) vorgesehen sind, wobei für die Funktionen des Einschwenkens, Schließens und Verriegelns sowie für die umgekehrten Funktionen Elektromotoren derart vorgesehen sind, daß die unterschiedlichen Funktionen koordiniert ablaufen, und wobei zum Ein- und Ausschwenken der Tür (1,25) ein Schrittmotor (5,32) vorgesehen ist, der mit dem Traglenker (3,27) derart in Wirkverbindung steht, daß dieser an seinem rumpfnahen Ende mittels des Schrittmotors (5,32) um eine rumpffeste Achse (4,28) schwenkbar ist, dadurch gekennzeichnet, daß die Elektromotoren in Form programmsteuerbarer Schrittmotoren (5,8,12,13,18,19,32,32a, 35,36,43,44) derart vorgesehen sind, daß die unterschiedlichen Funktionen aufgrund abgespeicherter Programme koordiniert ablaufen, und dadurch, daß der Traglenker (27) an seinem türnahen Ende eine annähernd vertikale Achse (29) aufweist und ein Schwenkmotor (32a) derart vorgesehen ist, daß die Tür (25) mittels des Schwenkmotors (32a) gegenüber dem Traglenker (27) um die Achse (29) schwenkbar ist.

3. Vorrichtung nach Anspruch 1, dadurch **gekennzeichnet**, daß im oberen Bereich der Tür (1,25) zwei Schrittmotoren (12,13) zur Betätigung von Verriegelungshaken (9,10) vorgesehen sind.

4. Vorrichtung nach Anspruch 2, dadurch **gekennzeichnet**, daß die Struktur (26) der Tür (25) an ihren seitlichen Kanten jeweils mindestens zwei Knebel aufweist, wobei je Knebel ein Schrittmotor (39 bis 41) vorgesehen ist, wodurch der jeweilige Knebel in Öffnungs- bzw. Schließstellung drehbar ist.

5. Vorrichtung nach Anspruch 4, dadurch **gekennzeichnet**, daß im oberen und im unteren Bereich der Tür (25) je eine Verkürzungsklappe (30,31) um eine annähernd horizontale Achse schwenkbar gelagert ist und je Verkürzungsklappe (30,31) ein Schrittmotor (35,36) zur Betätigung der Verkürzungsklappen (30,31) vorgesehen ist.

6. Vorrichtung nach einem der Ansprüche 1 bis 5, dadurch **gekennzeichnet**, daß mindestens einige der Schrittmotoren (5,8,12,13,18,19,32,32a,35,36,43,44) mit einem Zahnradgetriebe versehen sind, wodurch eine Übersetzung ins Langsame erreicht wird.

7. Vorrichtung nach einem der Ansprüche 1 bis 6, dadurch **gekennzeichnet**, daß im unteren Bereich der Tür (1,25) zwei Schrittmotoren zur Betätigung von Notrutschenhebeln (16,17) vorgesehen sind.

## Claims

1. Device for moving an aircraft door (1, 25) which, for opening, is swivelled outwards and, for closing, is swivelled into the fuselage structure and then brought into a form-fit position relative to the fuselage structure, transmission of the forces which result from the cabin internal pressure being effected by means of installation fittings and the door (1, 25) during the swivelling process being supported by a supporting connecting rod (3, 27) having a fuselage-side and a door-side end and electric motors being provided for operating the aircraft door (1, 25), electric motors being provided for the inward swivelling, closing and locking functions as well as for the reverse functions in such a way that the various functions are executed in a coordinated sequence, characterized in that electric motors in the form of program-controllable stepping motors (5, 8, 12, 13, 18, 19, 32, 32a, 35, 36, 43, 44) are provided and that the various functions are executed in a coordinated sequence on the basis of stored programs, the door (1, 25) being guided relative to the supporting connecting rod (3, 27) by means of a parallelogram and a stepping motor (8) being provided for lifting and lowering the door (1, 25) by means of a spindle drive (24), which acts via a lever (20) in such a way upon the parallelogram that the door (1, 25) upon extension and retraction of the spindle drive (24) is lifted and lowered relative to the supporting connecting rod (3, 27).

2. Device for moving an aircraft door (1, 25) which, for opening, is swivelled outwards and, for closing, is swivelled into the fuselage structure and then brought into a form-fit position relative to the fuselage structure, transmission of the forces which result from the cabin internal pressure being effected by means of toggles and the door (1, 25) during the swivelling process being supported by a supporting connecting rod (3, 27) having a fuselage-side and a door-side end and electric motors being provided for operating the aircraft door (1, 25), electric motors being provided for the inward swivelling, closing and locking functions as well as for the reverse functions in such a way that the various functions are executed in a coordinated sequence and there being provided for inward and outward swivelling of the door (1, 25) a stepping motor (5, 32) which is operationally connected to the supporting connecting rod (3, 27) in such a way that the latter at its fuselage-side end may be swivelled by means of the stepping motor (5, 32) about a fuselage-fixed axis (4, 28), characterized in that electric motors in the form of program-controllable stepping motors (5, 8, 12, 13, 18, 19, 32, 32a, 35, 36, 43, 44) are provided in such a way that the various functions are executed in a coordinated sequence on the basis of stored programs, and that the supporting connecting rod (27) at its door-side end has a substantially vertical axis (29) and a swivel motor (32a) is provided in such a way that the door (25) may by means of the swivel motor (32a) be swivelled relative to the supporting connecting rod (27) about the axis (29).

3. Device according to claim 1, characterized in that provided in the upper region of the door (1, 25) are two stepping motors (12, 13) for operating locking hooks (9, 10).

4. Device according to claim 2, characterized in that the structure (26) of the door (25) has at each of its side edges at least two toggles, one stepping motor (39 to 41) per toggle being provided so that the respective toggle is rotatable into opening and closing position.

5. Device according to claim 4, characterized in that a respective shortening flap (30, 31) is supported in the upper and in the lower region of the door (25) so as to be capable of swivelling about a substantially horizontal axis and one stepping motor (35, 36) per shortening flap (30, 31) is provided for operating the shortening flaps (30, 31).

6. Device according to one of claims 1 to 5, characterized in that at least some of the stepping motors (5, 8, 12, 13, 18, 19, 32, 32a, 35, 36, 43, 44) are provided with a gear train by means of which a gearing down is achieved.

7. Device according to one of claims 1 to 6, characterized in that provided in the lower region of the door (1, 25) are two stepping motors for operating evacuation slide levers (16, 17).

## Revendications

1. Système de conditionnement d'air pour un avion de passagers, dans lequel l'air climatisé est principalement fourni par une unité de conditionnement d'air et la cabine des passagers est préférentiellement divisée en trois zones climatiques (2, 3 ,4) contiguës dans la direction longitudinale de la cabine et pourvues chacune d'un détecteur zonal (18, 19, 20) destiné à enregistrer la température, chaque zone climatique présentant au moins un système de la distribution d'air (5, 6, 7, 8, 9, 10) connecté d'une part à l'unité de conditionnement d'air et d'autre part à un système d'air de distribution par l'intermédiaire d'un régulateur mélangeur pouvant être commandé, dans chaque système de distribution étant prévu un réglage des températures de telle manière que la température de l'air fourni par le système de distribution d'air (5, 6, 7, 8, 9, 10) en tant que température de mélange t + delta t provient de la température de l'unité de conditionnement d'air avec une température de base (t) prédéterminée et du mélange d'air de distribution chaud, un système de réglage de la température étant en outre prévu par chaque zone climatique,
**caractérisé en ce que** la cabine est divisée en segments d'introduction (A1, A2, A3, A4, A5, A6), chaque segment d'introduction (A1, A2, A3, A4, A5, A6) étant pourvu d'un système de distribution d'air (5, 6, 7, 8, 9, 10), le nombre de segments d'introduction (A1, A2, A3, A4, A5, A6) représentant un multiple du nombre de zones climatiques (2, 3, 4) et les commandes de température des divers systèmes de distribution d'air (5, 6, 7, 8, 9, 10) étant connectées à un dispositif de contrôle zonal (41) par l'intermédiaire duquel chaque système de distribution d'air (5, 6, 7, 8, 9, 10) correspond facultativement à une zone climatique (2, 3, 4) déterminée.

2. Système de conditionnement d'air selon la revendication 1, caractérisé en ce que afin de transmettre les ordres au dispositif de contrôle zonal (41) pour la coordination des systèmes de distribution d'air (5-10) est prévu un clavier.

3. Système de conditionnement d'air selon la revendication 1, caractérisé en ce que afin de transmettre les ordres au dispositif de contrôle zonal (41) pour la coordination des systèmes de distribution d'air (5-10) est prévu un système à disquettes.

4. Système de conditionnement d'air selon l'une ou l'autre des revendications 1 à 3, caractérisé en ce que le dispositif de contrôle zonal (41) destiné à transmettre les ordres de coordination présente une interface (48).

5. Système de conditionnement d'air selon l'une ou l'autre des revendications 1 à 4, caractérisé en ce que le dispositif de contrôle zonal (41) est connecté à une unité de configuration de cabine (49).

6. Système de conditionnement d'air selon la revendication 5, caractérisé en ce que l'unité de configuration de cabine (49) présente une fente de raccordement pour un module enfichable (51).

7. Système de conditionnement d'air selon la revendication 6, caractérisé en ce que le module enfichable (51) est basé sur une unité de stockage semi-conductrice programmable électriquement.
